# EUROPEAN PATENT APPLICATION

(11) **EP 1 571 891 A1**
(43) Date of publication of application: **07.09.2005**
(21) Application number: 04257775.9
(22) Date of filing: 14.12.2004
(51) Int. Cl.: H05B 6/76, H05B 6/80, H05B 6/66, F24C 15/02

(54) **Microwave oven with door latch assembly**

(30) Priority: 05.03.2004 KR 2004015034
(71) Applicant: SAMSUNG ELECTRONICS CO., LTD., Gyeonggi-do (KR)
(72) Inventor: Kim, Kyoung Ho, Suwon-Si Gyeonggi-Do (KR); Park, Guen Yong, Jangan-Gu Suwon-Si Geyeonggi-Do (KR); Cho, Jae Man, Kwonseon-Gu Suwon-Si Gyeonggi-Do (KR)
(74) Representative: Robinson, Ian Michael

(57) **Abstract**

A microwave oven provides protuberances (20) and a body latch (30) for opening and closing a door (14) therethrough. The microwave oven includes a door (14) for opening and closing a cooking chamber (11) accommodated in a main body (10), protuberances (20) installed on the door (14) for maintaining the door (14) so as to close the cooking chamber (11), a body latch (30) installed on the main body (10) so that the protuberances (20) are detachably engaged by the body latch (30), a door button (15b) installed on one side of the main body (10) so that the door button (15b) is movable back and forth to allow the door (14) to open and/or close for opening and closing the cooking chamber (11), and a door lever (34) for converting horizontal force, applied to the door button (15b), to vertical force, and transmitting the vertical force (34d) is integrally formed with the door lever (34) for pressing the contact points of safety switches (33a,b), so that the door lever (34) serves to press a monitor switch (33c) under the condition that the door lever (34) is engaged by the protuberances (20) and to transmit the force applied to the door button (15b) to the protuberances (20) to release the protuberances (20) from the body latch (30), thereby reducing the number of components of the microwave oven and simplifying the manufacturing and assembling procedure of the microwave oven.

## Description

The present invention relates to a microwave oven, and more particularly to a microwave oven having protuberances and a body latch for opening and closing a door therethrough.

A general microwave oven radiates high-frequency waves (i.e., microwaves) into a cooking chamber to perform the translational motion of water molecules contained in food positioned in the cooking chamber, and cooks the food using frictional heat generated by the translational motion. The microwave oven comprises a main body, in which the cooking chamber is positioned, and a door for opening and closing the cooking chamber.

The microwave oven is designed such that microwaves are supplied into the cooking chamber only when the cooking chamber is completely closed by the door, thereby preventing the microwaves, which are harmful to the human body from leaking to the outside. In order to perform the operation of the door, protuberances are formed on the door of the microwave oven, and a body latch, by which the protuberances are detachably engaged, are formed on the main body of the microwave oven. Accordingly, the protuberances are detachably engaged by the body latch, thereby maintaining the door so as to close the cooking chamber.

A plurality of safety switches are arranged on the body latch. The safety switches sense whether the protuberances are engaged into the body latch based on the opening and closing of the door to prevent microwaves from being radiating into the cooking chamber when the door is opened. When the safety switches sense the complete closing of the cooking chamber by the door, microwaves are irradiated into the cooking chamber.

A door button, for transmitting a user's force to the door to open the door from the cooking chamber, is installed on the front surface of the main body such that the door button can move back and forth. A door lever, for converting the force applied to the door button from a horizontal direction to a vertical direction, and a switch lever, for pressing contact points of the safety switches in case that the door is closed to the cooking chamber and moving upward to release the protuberances from the body latch in case that the door is opened from the cooking chamber, are installed inside the door button.

Since the above conventional microwave oven comprises the door lever and the switch lever, which are separately accommodated, the door lever and the switch lever are separately manufactured and are then installed in the body latch, thereby complicating the manufacturing and assembling procedure of the microwave oven.

An aim of the invention is to provide a microwave oven, in which protuberances and a body latch are easily manufactured and assembled.

According to the present invention there is provided an apparatus and method as set forth in the appended claims. Preferred features of the invention will be apparent from the dependent claims, and the description which follows.

In accordance with one aspect, the present invention provides a microwave oven comprising: a door for opening and closing a cooking chamber accommodated in a main body; protuberances installed on the door for maintaining the door so as to close of the cooking chamber; a body latch installed on the main body so that the protuberances are detachably engaged by the body latch; a door button installed on one side of the main body so that the door button is movable back and forth for opening and closing the cooking chamber ; and a door lever for converting horizontal force, applied to the door button, to vertical force, and transmitting the vertical force to the protuberances to release the protuberances from the body latch.

According to an aspect of the invention, prominences for engaging the protuberances into the body latch thereby are provided in the body latch, and fastening portions are respectively extended from ends of the protuberances, bent downward, and engaged by the prominences.

According to an aspect of the invention, the door lever includes: a hinge portion for rotatably fixing the door lever to the body latch; a transmission portion extended downward from the hinge portion and positioned in the rear of the door button for accepting force from the door button; and a conveyance portion positioned below the fastening portion and rotated by the force transmitted by the transmission portion centering on the hinge portion for pushing the fastening portion engaged by the prominence upward to release the fastening unit from the prominence.

According to an aspect of the present invention, the transmission portion and the conveyance portion are arranged at an obtuse angle centering on the hinge portion so that horizontal force supplied by a user is converted into vertical force.

According to an aspect of the present invention, safety switches, for allowing microwaves to be radiated into the cooking chamber only when contact points of the safety switches are pressed, are arranged in the rear of the conveyance portion, and a pressure portion, for pressing the contact points of the safety switches when the fastening portions are caught by the prominences, are integrally formed with the rear part of the conveyance portion.

In accordance with another aspect, the present invention provides a microwave oven comprising: a door for opening and closing a cooking chamber accommodated in a main body; protuberances installed on the door for maintaining the door so as to close the cooking chamber; a body latch installed on the main body so that the protuberances are detachably engaged by the body latch; a door button installed on one side of the main body so that the door button is movable back and forth for opening and closing the cooking chamber; a door lever for converting horizontal force, applied to the door button, to vertical force, and transmitting the vertical force to the protuberances to the protuberances from the body latch; safety switches arranged in the rear of the conveyance portion for allowing microwaves to be radiated into the cooking chamber only when contact points of the safety switches and monitor switch are pressed; and a pressure portion integrally formed with the rear part of the conveyance portion for pressing the contact points of the safety switches when the fastening portions are engaged by the prominences.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a perspective view of a microwave oven in accordance with an embodiment of the present invention;
Figure 2 is a side view illustrating the constitution of protuberances and a body latch of the microwave oven in accordance with an embodiment of the present invention; and
Figure 3 is a side view illustrating the operation of the protuberances and the body latch of the microwave oven in accordance with an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

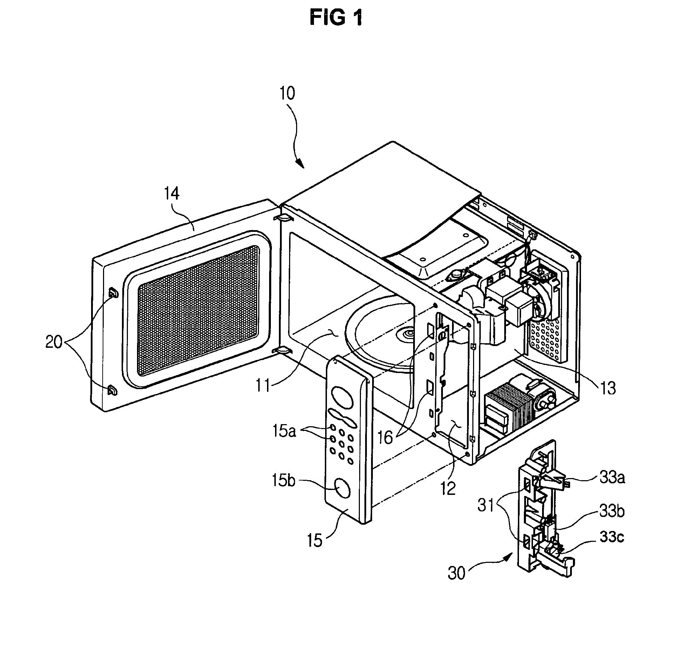

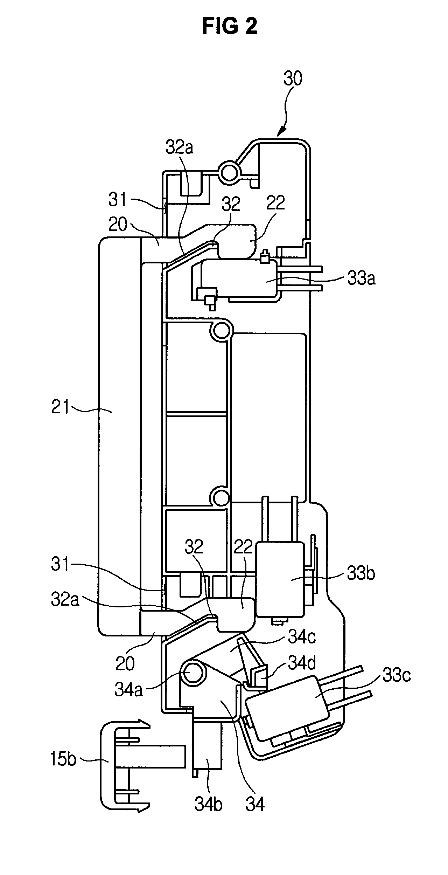

As shown in Figures 1 and 2, a microwave oven according to an aspect of the present invention comprises a main body 10 defining an external appearance. A cooking chamber 11, for cooking food therein, and an electric component chamber 12, for accommodating various electric components, is divided by a partition 13. The electric component chamber 12 contains a magnetron 12a for radiating microwaves into the cooking chamber 11, and a high-voltage transformer 12b for applying high voltage to the magnetron 12a.

A door 14 for opening and/or closing the front of the cooking chamber 11 is rotatably connected to one side of the main body 10. A control panel 15 is provided with a plurality of operating buttons 15a for controlling various functions of the microwave oven and is installed on the front of the electric component chamber 12.

A pair of protuberances 20 for maintaining the closed state of the cooking chamber 11 when the cooking chamber 11 is closed by the door 14 are installed on the door 14. A body latch 30, by which the protuberances 20 of the door 14 are detachably engaged and supported, is installed on the front surface of the electric component chamber 12.

Each of the protuberances 20 includes a fastening portion 22 extended there from and bent downwards to be engaged by the body latch 30. The protuberances 20 are connected to each other by a connecting unit 21, which is vertically movable in the door 14. Thereby, the two protuberances 20 are vertically movable simultaneously. The connecting unit 21 is elastically supported by an elastic member, such as a spring (not shown), so that the elastic member supports the connecting unit 21 from the lower part thereof. While described in terms of a spring, it is understood that other biasing mechanisms can be used, including pneumatic hydraulic, and electrical biasing mechanisms.

The body latch 30 corresponding to the positions of the protuberances 20 is positioned on the front of the electric component chamber 12, and is fixed to one surface of the partition 13 toward the electric component chamber 12 by connecting mechanisms screws. Examples of connecting mechanisms include glues, and other fastening devices. Grooves 31 are formed at positions, corresponding to the protuberances 20, in the front of the body latch 30, and through holes 16 corresponding to the grooves 31 are formed through the front of the main body 10. Prominences 32 are respectively formed on the insides of the grooves 31 of the body latch 30, thereby guiding the entry of the protuberances 20 and fixing the protuberances 20.

The prominences 32 are extended from the lower ends of the grooves 31 toward the inside of the body latch 30 by a predetermined length. The upper surfaces of the prominences 32 are inclined upwards and include inclined guide surfaces 32a. Accordingly, when the protuberances 20 are entered into the grooves 31, the fastening portions 22 of the protuberances 20 move upwards by a predetermined distance by the guide of the guide surfaces 32a, move downwards by the elastic force of the elastic member (not shown) and are engaged by the inner ends of the prominences 32.

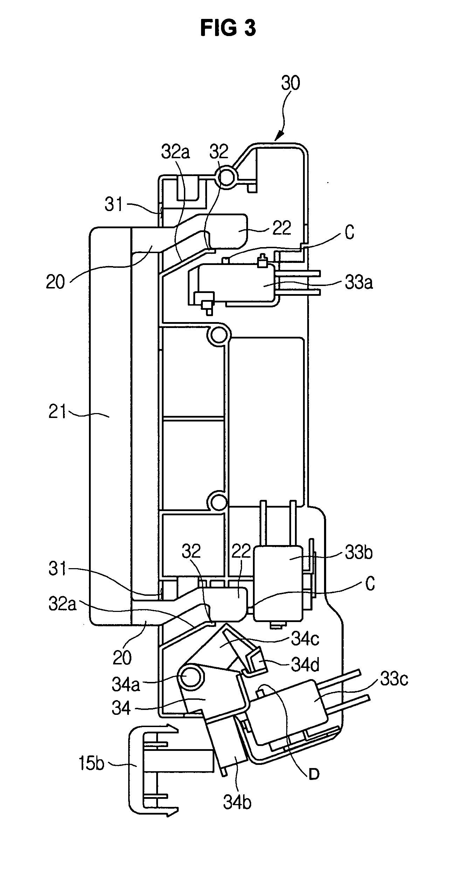

A plurality of safety switches 33a, 33b and a monitor switch 33c are in the body latch 30. The switches 33a, 33b, 33c sense the opening and/or closing of the cooking chamber 11 by the door 14 based on whether the two protuberances 20 are engaged into the body latch 30 to control the operation of the microwave oven. That is, in case that the protuberances 20 are engaged by the prominences 32, contact points C (with reference to Figure 3) of the safety switches 33a and 33b are pressed by the protuberances 20 and a contact point D of the monitor switch 33c is pressed by a pressure portion 34d. The operation of the microwave oven is controlled such that the microwaves are radiated into the cooking the contact portion of monitor switch chamber 11 only when the contact points C and D (with reference to Figure 3) of the safety switches 33a, 33b and 33c are pressed by the protuberances 20 and the pressure portion 34d, respectively. However, it is understood that other safety switch configurations of switches 33a, 33b, and 33c can be used, and that other numbers of switches, including less switches, can be used.

Here, the safety switches 33a, 33b, include first and second sense switches 33a and 33b respectively disposed in the rear of the protuberances 20 for sensing whether the protuberances 20 are engaged into the body latch 30. A monitor switch 33c is further included for cutting off the power of the microwave oven in case that the first and second sense switches 33a and 33b malfunction.

A door button 15b for opening the door 14 from the cooking chamber 11 is installed on a lower part of the control panel 15.A door lever 34 for transmitting force from the door button 15b to the protuberances 20 to release the protuberances from the body latch 30 is installed inside the lower part of the control panel 15.

The door button 15b is exposed from the control panel 15 so that force from the outside (i.e., a user) is transmitted to the door button 15b, and the door button 15b is movable back and forth so that the door button 15b can transmit its force to the door lever 34.

The door lever 34 receives the horizontal force from the door button 15b, which moves back and forth, converts the horizontal force into a vertical force, and transmits the vertical force to the protuberances 20 so that the protuberances 20 are pushed upwards. The door lever 34 includes a hinge portion 34a for rotatably installing the door lever 34 to the body latch 30, a transmission portion 34b extended downward from the hinge portion 34a and positioned in the rear of the door button 15b for accepting force from the door button 15b by means of the backward movement of the door button 15b, and a conveyance portion 34c rotated by the force transmitted by the transmission portion 34b centering on the hinge portion 34a for pushing the protuberances 20 upward. Here, the transmission portion 34b and the conveyance portion 34c of the door lever 34 are arranged at an obtuse angle so that the horizontal force supplied by a user is converted into vertical force and the vertical force is transmitted to the protuberances 20. While described in terms of "vertical and "horizontal," it is understood that the lever 34 can be used to transfer force in other orthogonal or non-orthogonal directions.

The monitor switch 33c is positioned in the rear of the conveyance portion 34c of the door lever 34, and a pressure portion 34d for pressing the monitor switch 33c is extended from the rear end of the conveyance portion 34c. When the protuberances 20 are engaged by the prominences 32, the pressure portion 34d presses the monitor switch 33c, thereby sensing the closed state of the cooking chamber 11 by the door 14.

Hereinafter, the operation and effects of the microwave oven in accordance with the present invention will be described in detail.

First, the closing of the cooking chamber 11 by the door 14 will be described with reference to Figure 2. The two protuberances 20 are entered into the body latch 30 through the two grooves 31 of the body latch 30. Here, the two protuberances 20 move upward along the guide surfaces 32a of the prominences 32, and then move downward by the elastic force of the spring (not shown) installed in the door 14, so that the protuberances 20 are respectively engaged by the prominences 32 and press the contact points (C) of the first sense switch 33a and the second sense switch 33b. When power is applied to the magnetron 12a, the magnetron 12a can radiate microwaves into the cooking chamber 11.

Next, the opening of the cooking chamber 11 by the operation of the door 14 will be described with reference to Figure 3. When the door button 15b moves backward by the force, such as that applied by a user, the transmission portion 34b of the door lever 34 positioned in the rear of the door button 15b moves backward together with the door lever 34 and rotated centering on the hinge portion 34a. Thereby, the conveyance portion 34c of the door lever 34 pushes the lower ends of the fastening portions 22 of the protuberances 20 upward, thus releasing the fastening portions 22 from the prominences 32. Here, since the prominences 20 are continuously supported by the spring (not shown), the fastening portions 22 move along the guide surfaces 32a by means of the elastic force of the spring, thereby allowing the door 14 to be opened from the front surface of the cooking chamber 11.

As the protuberances 20 are released from the body latch 30, the contact points (C) of the first sense switch 33a, the second sense switch 33b and the monitor switch 33c, which have been pressed by the protuberances 20 and the pressure portion 34d of the door lever 34, respectively, are returned to their original states, thereby cutting off the supply of the microwaves to the cooking chamber 11.

As apparent from the above description, aspects of the present invention provides a microwave oven, in which a transmission portion, for accepting force from a door button, a conveyance portion, for transmitting the force of protuberances to a door lever, and a pressure portion, for pressing a monitor switch serving as a safety switch, are integrally installed in the door lever, so that the door lever serves to press a monitor switch under the condition that the door lever is engaged by the protuberances and to transmit the force applied to the door button to the protuberances to release the protuberances from the body latch, thereby reducing the number of components of the microwave oven and simplifying the manufacturing and assembling procedure thereof.

While described in terms of a microwave oven, it is understood that the invention can be used in other appliances having doors, and that the microwave oven and/or other appliance need not use the sensors in all aspects of the invention.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A microwave oven, comprising:
a main body (10) having a cooking chamber (11);
a door (14) for opening and/or closing the cooking chamber (11);
protuberances (20) installed on the door (14) for maintaining the door (14) so as to close the cooking chamber (11);
a body latch (30) installed on the main body (10) so that the protuberances (20) are detachably engaged by the body latch (30);
a door button (15b) installed on one side of the main body (10) so that the door button (15b) is movable back and forth to allow the door (14) to open and/or close the cooking chamber (11); and
a door lever (34) rotatably connected to the main body (10) using a pivot (34a) and having a first portion (34b) which contacts the door button (15b) for converting a horizontal force, applied to the door button (15b), to a vertical force, and a second portion (34c) which contacts to one of the protuberances (20) for transmitting the vertical force to the protuberances (20) to release the protuberances (20) from the body latch (30).

2. The microwave oven according to claim 1, wherein the body latch (30) further includes prominences (32) for catching the protuberances (20) when engaged in the body latch (30), and fastening portions (22) are respectively extended from ends of the protuberances (20), and are bent downward, to engage the prominences (32).

3. The microwave oven according to claim 2, wherein the door lever (34) includes:
a hinge portion (34a) for rotatably fixing the door lever (34) to the body latch (30);
a transmission portion (34b) extended downward from the hinge portion (34a) and positioned in the rear of the door button (15b) for accepting force from the door button (15b); and
a conveyance portion (34c) positioned below the fastening portion (22) and which is rotated by the horizontal force transmitted by the transmission portion (34b) centering on the hinge portion (34a) for pushing the fastening portion (22) engaged by the prominence (32) upward to release the fastening unit (22) from the prominence (32).

4. The microwave oven according to claim 3, wherein the transmission portion (34b) and the conveyance portion (34c) are arranged at an obtuse angle centering on the hinge portion (34a) so that the horizontal force supplied by a user is converted into the vertical force.

5. The microwave oven according to claim 3 or 4, comprising a monitor switch (33c) for allowing microwaves to be radiated into the cooking chamber only when contact point of the monitor switch (33c) is pressed, the monitor switch (33c) being arranged in a rear of the conveyance portion (34c), and a pressure portion (34d) for pressing the contact points of the monitor switch (33c) when the fastening portions (22) are engaged by the prominences (32), the pressure portion (34d) being integrally formed with the rear part of the conveyance portion (34c).

6. A microwave oven comprising:
a main body (10) having a cooking chamber (11);
a door (14) for opening and closing the cooking chamber (11);
protuberances (20) installed on the door (14) for maintaining the door (14) so as to close the cooking chamber (11);
fastening portions (22) extended from the protuberances (20);
a body latch (30) installed on the main body (10) so that the protuberances (20) are detachably engaged by the body latch (30);
a door button (15b) installed on one side of the main body (10) so that the door button (15b) is movable back and forth for opening and/or closing the cooking chamber (11) using the door (14);
a door lever (34) rotatably connected to the main body (10) at a pivot (34a) and having a conveyance portion (34c) for converting a horizontal force, applied to the door button (15b), to a vertical force, and transmitting the vertical force to the protuberances (20) to release the protuberances (20) from the body latch (30);
safety switches (33a,33b) for allowing microwaves to be radiated into the cooking chamber (11) only when contact points of the safety switches (33a,b) are pressed;
a monitor switch (33c) for cutting off the power of the microwave oven regardless of a state of the safety switches (33a,b); and
a pressure portion (34d) integrally formed with a rear part of the conveyance portion (34c) for pressing the contact point of the monitor switch (33c) when the fastening portions (22) are engaged by the prominences (32).

7. A method of radiating a microwave into a cooking chamber which is opened and/or closed by a door (14) for microwave oven comprising:
changing a state of a first switch (33a), a second switch (33b), and a monitoring switch (33c) through a rotation of a door lever (34) being engaged by a door button (15b) and pressing against a protuberance (20) installed on a door (14), where a movement of the protuberance (20) locks or unlocks the door (14) to allow the door (14) to open and/or close the cooking chamber (11);
checking the state of the first sensing switch (33a);
checking the state of the second sensing switch (33b);
checking the state of the monitor switch (33c); and
stopping an emission of the microwaves into the cooking chamber (11) when the state of first sensing switch (33a), the second sensing switch (33b), and/or the monitoring switch (33c) is off.

8. The method of claim 7, further comprises starting radiating the microwave into the cooking chamber (11) when all the switches (33a,33b,33c) are on.

9. An apparatus for controlling power of a system having a door (14) having a protuberance which locks or unlocks the door (14), comprising;
a door lever (34) rotatably connected within the system and having a first portion (34b) which connects to a door button (15b) and a second portion (34c) which connects to the protuberance (20);
at least one of door switches (33a,b) for sensing whether door (14) is open according to a movement of the protuberance; and
a monitor switch (33c) for sensing whether the monitor switch (33c) is pressed by the first portion (34b) for cutting off power of the system when the monitor switch (33c) is off regardless of the status of the at least one door switch (33a,33b).

10. A microwave oven comprising:
a main body (10) having a cooking chamber (11);
a door (14) for opening and/or closing the cooking chamber (11);
at least one switch (33a,b) which detects whether the cooking chamber (11) is open;
a protuberance (20) installed on the door (14) to maintain the door (14) in a closed portion so as to close the cooking chamber (11);
a body latch (30) installed on the main body (10) so that the protuberance (20) is detachably engaged by the body latch (30);
a door button (15b) installed on the main body (10) so that the button (20) is movable back and forth to allow the door (14) to open or close the cooking chamber (11);
a door lever (34) which contacts the door button (15b) and the protuberance (20) and which rotates to transmit a force from the door button (15b) to the protuberance to release the protuberance from the body latch (30); and
a controller (15) which monitors a state of the switches (33a,b) and controls an emission of microwaves into the cooking chamber (11) according to the state of the switch (33a,b).
